# EUROPÄISCHE PATENTSCHRIFT

(11) **EP 1 358 700 B1**
(45) Veröffentlichungstag und Bekanntmachung des Hinweises auf die Patenterteilung: **14.03.2007**
(21) Anmeldenummer: 02712741.4
(22) Anmeldetag: 04.02.2002
(51) Int. Cl.: H01S 3/139

(54) **VERFAHREN ZUR UBERPRUFUNG DES REGEL-ZUSTANDES EINER FREQUENZSTABILISIERTEN LASERANORDNUNG UND FREQUENZSTABILISIERTE LASERANORDNUNG**
METHOD FOR CHECKING THE REGULATION STATE OF A FREQUENCY-STABILISED LASER SYSTEM AND FREQUENCY-STABILISED LASER SYSTEM
PROCEDE POUR LE CONTROLE DE L'ETAT DE REGULATION D'UN SYSTEME LASER A FREQUENCE STABILISEE ET SYSTEME LASER A FREQUENCE STABILISEE

(30) Priorität: 07.02.2001 DE 10105840
(43) Veröffentlichungstag der Anmeldung: 05.11.2003
(73) Patentinhaber: BUNDESREPUBLIL DEUTSCHLAND VERTR. D.D. BUNDESMINISTERIUM FÜR WIRTSCHAFT UND TECHNOLOGIE, DIESES VERTR. D.D. PRÄSIDENTEN DER, 38116 Braunschweig (DE)
(72) Erfinder: SCHNATZ, Harald, 38176 Wendeburg (DE)
(74) Vertreter: Lins, Edgar
(86) Internationale Anmeldenummer: PCT/DE2002/000398
(87) Internationale Veröffentlichungsnummer: WO 2002/067389

(56) Entgegenhaltungen:
- US-A- 4 590 597
- US-A- 4 765 736
- GALZERANO G ET AL: "HIGH-FREQUENCY-STABILITY DIODE-PUMPED ND: YAG LASERS WITH THE FM SIDEBANDS METHOD AND DOPPLER-FREE IODINE LINES AT 532 NM" APPLIED OPTICS, OPTICAL SOCIETY OF AMERICA,WASHINGTON, US, Bd. 38, Nr. 33, 20. November 1999 (1999-11-20), Seiten 6962-6966, XP000903744 ISSN: 0003-6935 in der Anmeldung erwähnt
- PATENT ABSTRACTS OF JAPAN vol. 2000, no. 08, 6. Oktober 2000 (2000-10-06) -& JP 2000 151000 A (ANRITSU CORP;NIPPON TELEGR & TELEPH CORP <NTT>), 30. Mai 2000 (2000-05-30)

## Beschreibung

Die Erfindung betrifft ein Verfahren zur Überprüfung des Regelungszustandes einer frequenzstabilisierten Laseranordnung mit einem Laser, dessen Laserstrahl wenigstens eine erste Seitenbandfrequenz aufmoduliert wird und durch ein Absorptionsmaterial geleitet wird, das eine Mehrzahl von Absorptionslinien in einem Verstimmbereich des Lasers aufweist, die in unterschiedlichen Abständen zueinander angeordnet sind, wobei die Laserfrequenz verstimmt wird und als Regelsignal für die Laserfrequenz detektiert wird, ob eine Absorption im Absorptionsmaterial stattgefunden hat.

Die Erfindung betrifft ferner eine frequenzstabilisierte Laseranordnung mit einem Laser, dessen Laserstrahl wenigstens eine mittels einer ersten Modulationseinrichtung erzeugte erste Seitenbandfrequenz zu einer Laserfrequenz aufweist und ein Absorptionsmaterial durchläuft, das eine Mehrzahl von Absorptionslinien in einem Verstimmbereich des Lasers aufweist, die in unterschiedlichen Abständen zueinander angeordnet sind, mit einer Verstimmeinrichtung für die Verstimmung der Laserfrequenz über den Verstimmbereich und mit einer Auswertungseinrichtung zur Erkennung einer Absorption in dem Absorptionsmaterial und zur Einregelung des Lasers auf eine Absorptionslinie.

Für zahlreiche Anwendungsfälle werden präzise Referenzfrequenzen benötigt, die insbesondere für Längen- und Frequenzmessungen, optische Kommunikation und Präzisionsspektroskopie üblicherweise durch Laser zur Verfügung gestellt werden, die auf geeignete Absorptionslinien stabilisiert werden.

Die Entwicklung hierfür geeigneter Laserquellen hängt ab von der Verfügbarkeit der Referenzlinien in Atomen, Ionen oder Molekülen. Während atomare oder ionische Übergänge in der Regel eine eindeutige Zuordnung erlauben, ergeben sich aufgrund der komplizierten Struktur der Moleküle eine Vielzahl von möglichen Übergängen, die alle zur Stabilisierung benutzt werden können. In der überwiegenden Zahl von Anwendungen wird aus dem breiten Spektrum von möglichen Absorptionslinien eine spezielle Linie zur Stabilisierung des Lasers ausgewählt, deren atomare oder molekulare Übergangsfrequenz exakt bekannt ist.

Anwendungsbeispiele sind:
- Ein jodstabilisierter HeNe-Laser, der in Forschung und Technik aufgrund seiner einfachen Bedienbarkeit und Zuverlässigkeit weiter Verbreitung gefunden hat,
- kommerziell verfügbare, frequenzverdoppelte Nd:YAG-Laser mit einer Wellenlänge von λ = 532 nm, der ebenfalls jodstabilisierbar ist, da die sehr starken Absorptionslinien von I₂-Molekülen in der Nähe von 532 nm ein ideales Frequenzgitter zur Stabilisierung darstellen,
- C₂H₂ stabilisierte Diodenlaser zur Anwendung in Telekommunikationsbändern,
- CH₄ stabilisierte HeNe-Laser bei 3,3 *µ*m
- OsO₄ stabilisierte CO₂-Laser bei 10 *µ*m.

Für die Frequenzstabilisierung wird dabei ausgenutzt, dass der Laserstrahl vom Absorptionsmaterial absorbiert wird. Diese Absorption kann detektiert und als Regelsignal für die Laserfrequenz verwendet werden. Die Verstimmung des Lasers kann in bekannter Weise in Abhängigkeit vom Lasertyp durch Eingriff in den Laserresonator durch Temperaturveränderung usw. erfolgen.

Ausgeklügelte Stabilisierungsverfahren und -anordnungen verwenden Methoden der Phasenmodulationsspektroskopie (Bjorklund, Opt. Lett., 1980, 5, 15; Hall, Hollberg, Baer, Robinson, Appl. Phys. Lett., 39, 680 (1981)) der Modulationstransferspektroskopie (Shirley, Optics Lett. 7, 537-539 (1982), Ma, Hall, IEEE J. Quant. Electr., 26, 2006 (1990)) oder der Sättigungsspektroskopie mit der Detektion der dritten Harmonischen (Wallard, J. Phys. E5, 926 (1972)).

Allen Verfahren ist gemeinsam, dass der Laserstrahl durch eine mit dem Absorptionsmaterial gefüllte Zelle geleitet wird und für die betreffende Absorptionslinie den betreffenden Übergang von einem Elelctronenzustand in den anderen hervorruft.

Bei der Phasenmodulationsspektroskopie wird ein diesen Übergang verursachender Pumpstrahl erzeugt und durch die Zelle mit dem Absorptionsmaterial geleitet. Die erfolgte Absorption wird durch einen gegenläufigen phasenmodulierten Analysestrahl nachgewiesen. Dem Analysestrahl werden mit Hilfe eines elektrooptischen Modulators (EOM) Seitenbänder im Abstand der Modulationsfrequenz aufgeprägt. Aufgrund der Schwebung der beiden Seitenbänder mit dem Träger ergeben sich an einem, den Analysestrahl nach Durchlaufen des Absorptionsmaterial detektierenden Fotodetektor zwei Signale bei der Modulationsfrequenz. Ohne eine Resonanz auf Absorption im Absorptionsmaterial interferieren diese beiden Signale, die eine Phasendifferenz von 180° aufweisen, sodass sie sich gegenseitig auslöschen. Erfährt jedoch eines der beiden Seitenbänder durch die Wechselwirkung mit dem Absorptionsmaterial Absorption und Dispersion, so resultiert daraus eine Absorption und Phasenverschiebung, die die Balance der Schwebungssignale aufhebt. Es resultiert ein Detektorsignal, das zwei Anteile enthält, nämlich ein Dispersionssignal in Phase mit der angelegten Modulationsfrequenz und ein um 90° phasenverschobenes Absorptionssignal.

Das Dispersionssignal enthält nur noch einen kleinen Untergrund und wird daher als Diskriminatorsignal für die Frequenzregelung eingesetzt. Zur weiteren Reduzierung des Untergrundes wird die Absorption des Pumpstrahls periodisch moduliert und das FM-Signal phasenempfindlich detektiert.

Bei diesem Verfahren wird die Modulationsfrequenz groß gegenüber der spektralen Breite der untersuchten Struktur gewählt. Darüber hinaus wird der Fangbereich der Stabilisierung durch die Modulationsfrequenz bestimmt. Modulationsfrequenzen oberhalb der Relaxationsoszillationen der verwendeten Laser sind zweckmäßig, da hier das geringe technische Rauschen der Laser eine hohe Empfindlichkeit erlaubt, der Fangbereich ausreichend groß ist und Frequenzverschiebungen durch Beiträge benachbarter Hyperfeinlinien noch gering sind.

Die Modulationstransferspektroskopie beruht auf der Übertragung der Modulation des Pumpstrahls auf den unmodulierten Analysestrahl durch moduliertes Lochbrennen und einer Reflektion an einem induzierten Besetzungsdichtegitter. Dieser Prozess kann im Rahmen einer 4-Wellenmischung beschrieben werden. Der Träger des frequenzmodulierten Strahls und eines seiner Seitenbände koppeln über die nichtlineare Suszeptibilität dritter Ordnung des Mediums an dem entgegenkommenden unmodulierten Analysestrahl. Der Pumpstrahl brennt Löcher im Abstand der Modulationsfrequenz um den Träger mit modulierter Tiefe in die Geschwindigkeitsverteilung der Besetzungsdichte des Grundzustandes. Die Besetzungsdichte oszilliert damit mit der Modulationsfrequenz. Somit erfährt der unmodulierte Strahl eine mit der Modulationsfrequenz veränderliche Absorption und Dispersion, was einer Frequenzmodulation des vorher unmodulierten Probestrahls entspricht. Ein schmalbandiger Fotodetekor detektiert den Analysestrahl. Mittels eines doppeltbalancierten Mischers wird die Phaseninformation ins Basisband übersetzt und als Regelsignal einem PI-Regler zugeführt. Voraussetzung für dieses Verfahrens ist, dass das Absorptionsmaterial der Modulation hinreichend schnell folgen kann. Daher werden Modulationsfrequenzen benutzt, die etwa der halben Linienbreite des Übergangs entsprechen (einige 100kHz).

Der Vorteil dieses Verfahrens besteht darin, dass es unempfindlicher gegen eine restliche Amplitudenmodulation im EOM ist, da nur im Resonanzfall eine Modulation des Analysestrahls durch den Modulationsstransfer erfolgt. Dies wirkt sich insbesondere auf die Langzeitstabilität aus.

Bei der Sättigungsspektroskopie wird ein modulierter Lsserstrahl durch das Absorptionsmaterial geleitet und anschließend als reflektierter Strahl nach Durchlaufen einer λ/4-Zelle reflektiert und in umgekehrter Richtung durch das Absorptionsmaterial geleitet.

Eine phasenempfindliche Demodulation der n-ten Harmonischen der Modulationsfrequenz liefert im wesentlichen die n-te Ableitung des Linienprofils. Die Detektion der 3. Harmonischen erlaubt den untergrundfreien Nachweis der Hyperfeinstrukturresonanz mit einem Nulldurchgang des Fehlersignals im Linienzentrum.

Bei diesem Verfahren lässt sich zweckmäßig eine direkte Modulation des Lasers realisieren. Bei einem frequenzverdoppelten Nd:YAG Laser kann die Modulation mittels einer Piezokeramik direkt auf den Nd:YAG Kristall aufgeprägt werden. Wie bei den anderen Verfahren ist aber auch eine externe Frequenzmodulation durch elektrooptische Modulatoren oder akustooptische Modulatoren möglich.

Die bekannten Stabilisierungen von Laserfrequenzen mit Hilfe von Absorptionslinien von Molekülen bringen das Problem mit sich, dass im Verstimmbereich des Lasers eine Vielzahl von Absorptionslinien mit jeweils zahlreichen Hyperfeinkom ponenten existieren. Im Prinzip kann jede dieser Hyperfeinkomponenten zur Stabilisierung benutzt werden. Für einen iodstabilisierten, frequenzverdoppelten Nd:YAG Laser liegen im Bereich von 60 GHz um die Wellenlänge 532 nm etwa 10 bis 15 Jodabsorptionslinien mit jeweils 15 oder 21 Hyperfeinkomponenten. Regelmäßig ist die absolute Frequenz einer Komponente und der Frequenzabstand einer beliebigen Komponente zur benachbarten Komponente genau bekannt. Für das genannte Beispiel wurden in dem interessierenden Spektralbereich beispielsweise die absolute Frequenz der a10 Komponenten der Jodlinie P (54) - 34-0 gemessen und die Frequenzabstände relativ zu dieser Linie bestimmt. Damit steht ein Frequenzgitter mit ca. 240 Hyperfeinkomponenten zur Verfügung, auf das sich ein Laser stabilisieren lässt. Jede dieser Komponenten hat zur Nachbarlinie einen eindeutigen Frequenzabstand und eine bestimmte bekannte Signalstärke.

Um ein absolutes Laserfrequenznormal zu erstellen, muss sichergestellt sein, dass der Laser auf eine eindeutige Hyperfeinkomponente des Absorptionsmaterial eingestellt und stabilisiert wird. Dabei muss sichergestellt werden, dass der stabilisierte Laser auch über einen längeren Zeitraum auf genau dieser Linie stabilisiert bleibt.

Um die Abstimmung auf eine gewünschte Hyperfeinkomponente des Absorptionsmaterial vorzunehmen, wird in bekannter Technik der Laser über den gesamten Frequenzbereich abgestimmt. Dabei wird das bekannte Muster der Frequenzabstände, der Anzahl der Resonanzen und der zugehören Signalstärken benutzt, um die Absorptionslinie eindeutig zu identifizieren. Danach erfolgt durch sukzessives Reduzieren des überstrichenen Frequenzbereiches und einer manuellen oder Feinabstimmung des Lasers die Stabilisierung auf den gewünschten Übergang.

Automatische Verfahren für die Laserstabilisierung nutzen das Abzählen der Linien als einziges Kriterium. Diese Verfahren zeigen noch häufige Fehlstabilisierungen, so dass eine permanente Kontrolle notwendig ist. Daher erfordert der Betrieb jodstabilisierter Laser immer noch hochqualifiziertes Personal, das aufgrund der Kenntnis des Frequenzmusters die Stabilisierung der Laser manuell durchführt und in der Lage ist, einen zufälligen Sprung der Laserfrequenz zu einer benachbarten Komponente rechtzeitig zu erkennen. Darüber hinaus kann eine wiederholte Überprüfung, ob der Laser noch auf der ausgewählten Übergangsfrequenz arbeitet, nur durch Unterbrechung des Stabilisierungsalgorithmus und durch erneute Mustererkennung oder mit Hilfe eines zweiten stabilisierten Lasers und einer Differenzfrequenzmessung oder einer hinreichend genauen Wellenlängenmessung erreicht werden. In jedem Fall werden dann teure und komplizierte Zusatzgeräte benötigt.

Durch Galzerano et al. in Applied Optics Vol. 38, Seiten 6962 - 6966 (1999) ist es bekannt, das Frequenzspektrum von Jod genau zu vermessen, indem zwei Laser verwendet werden, die in herkömmlicher Weise jeweils eine Absorptionsfrequenz des Jods detektieren. Laser werden auf unterschiedliche Modulationsfrequenzen eingestellt, wobei die Modulationsrequenzen der beiden Laser relativ zueinander festgelegt werden. Wenn nun in herkömmlicher Weise Absorptionen detektiert werden, lässt sich der Frequenzabstand durch den eingestellten Frequenzabstand der Modulationsfrequenzen genau bestimmen. Die Anordnung der beiden Laser dient daher der Bestimmung der genauen Hyperfeinfrequenzen des Jods (vgl. Tabelle 1) als Grundlage zur herkömmlichen Frequenzstabilisierung mittels einer ausgewählten Spektrallinie der Hyperfeinstruktur.

Der Erfindung liegt die Problemstellung zugrunde, eine automatische Bestimmung der gewünschten Absorptionslinie zu ermöglichen, sodass die Einregelung des frequenzstabilisierten Lasers und eine sichere Langzeitstabilisierung des Lasers auf diese Absorptionslinie automatisierbar ist.

Zur Lösung dieses Problems ist erfindungsgemäß ein Verfahren der eingangs erwähnten Art dadurch gekennzeichnet, dass dem Laserstrahl eine zweite Seitenbandfrequenz mit einem durch einen Frequenzgenerator definierten und bekannten Abstand zur Laserfrequenz aufmoduliert wird, dass zumindest zeitweise die Absorption der zweiten Seitenbandfrequenz im Absorptionsmaterial überprüft wird und dass die Laserfrequenz, wenn für die zweite Seitbandfrequenz keine Absorption festgestellt wird, so lange verstimmt wird, bis eine Absorption sowohl der Laserfrequenz als auch der zweiten Seitenbandfrequenz festgestellt wird.

Zur Durchführung dieses Verfahrens ist eine frequenzstabilisierte Laseranordnung der eingangs erwähnten Art geeignet, die erfindungsgemäß gekennzeichnet ist durch eine zweite Modulationseinrichtung zur Generierung wenigstens einer zweiten Seitenbandfrequenz desselben Laserstrahls, deren Abstand zur Laserfrequenz definiert einstellbar und deutlich größer als der Abstand der ersten Seitenbandfrequenz ist, und durch eine Detektionseinrichtung zur Feststellung einer Absorption der zweiten Seitenbandfrequenz im Absorptionsmaterial.

Erfindungsgemäß wird dem Laserstrahl eine zweite Seitenbandfrequenz aufmoduliert, deren Abstand zur Laserfrequenz durch die Einstellung der Frequenz eines Frequenzgenerators definiert vorgebbar ist. Der vorzugsweise einstellbar ausgeführte Frequenzgenerator wird dabei auf eine Frequenz eingestellt, die dem Abstand einer benachbarten Absorptionslinie zu der gewünschten Absorptionslinie, auf der die Stabilisierung der Laserfrequenz erfolgen soll, entspricht. Während die für die Frequenzstabilisierung in bekannter Weise aufmodulierten ersten Seitenbandfrequenzen innerhalb der Dopplerbandbreite der Absorptionslinie liegen und zur Detektion einer Absorption eines Pumpstrahls in dem Absorptionsmaterial mittels eines Analysestrahls dienen, ist der Abstand der durch die zweite Modulationseinrichtung generierten zweiten Seitenbandfrequenz so gewählt, dass er dem Abstand zwischen der zur Frequenzstabilisierung vorgesehenen Absorptionslinie zu einer benachbarten Absorptionslinie in dem Absorptionsmaterial entspricht. Da dieser Abstand zwischen zwei Absorptionslinien in dem Absorptionsmaterial nur einmal vorkommt, kann mit Hilfe dieses Abstandes die Einregelung des Lasers auf die gewünschte Absorptionslinie eindeutig bestimmt werden, wenn erfindungsgemäß festgestellt wird, dass sowohl die Laserfrequenz als auch die zweite Seitenbandfrequenz im Absorptionsmaterial absorbiert wird. Von Bedeutung ist dabei, dass erfindungsgemäß die Frequenzstabilisierung der Laserfrequenz durch die Überprüfung der Absorption der zweiten Seitenbandfrequenz im Absorptionsmaterial nicht unterbrochen wird.

In einer bevorzugten Ausführungsform der Erfindung wird die zweite Modulationseinrichtung periodisch ein- und ausgeschaltet. Ist die Absorptionsbedingung für die zweite Seitenbandfrequenz im Absorptionsmaterial erfüllt, wird beim Ein- und Ausschalten das Regelsignal kurzfristig gestört, wodurch im Fehlersignal Signalspitzen synchron mit dem Ein- und Ausschalten entstehen und somit anzeigen, dass eine Absorption auch auf der zweiten Seitenbandfrequenz stattfindet, also die Frequenzstabilisierung des Lasers weiterhin auf der gewünschten Laserfrequenz erfolgt.

Die Erfindung beruht somit darauf, dass für eine bestimmte Absorptionslinie, auf der die Frequenzstabilisierung des Lasers erfolgen soll, bekannt ist, welchen Abstand eine benachbarte Absorptionslinie aufweist. Durch Einstellung dieses Frequenzabstandes mittels des Frequenzgenerators der zweiten Modulationseinrichtung wird die zweite Seitenbandfrequenz so erzeugt, dass sie den Abstand zur Laserfrequenz aufweist, der gleich dem Abstand zwischen der gewünschten Absorptionslinie und der benachbarten Absorptionslinie ist. Durch Überprüfung, ob sowohl für die Laserfrequenz als auch für die zweite Seitenbandfrequenz Absorptionen im Absorptionsmaterial stattfinden, kann festgestellt werden, ob die Stabilisierung der Laserfrequenz auf der gewünschten Absorptionslinie erfolgt und zwar sowohl beim erstmaligen Einstimmen der Frequenzregeleinrichtung als auch für ein ständiges (periodisches oder nicht periodisches) Überprüfen, ob die Regelung noch auf der gewünschten Absorptionslinie stattfindet oder durch äußere Vorgänge einspringen auf eine andere Absorptionslinie stattgefunden hat. Der Stabilisierungsalgorithmus für die Frequenzstabilisierung des Lasers wird dadurch nicht gestört.

Die Erfindung soll im Folgenden anhand von in der Zeichnung dargestellten Ausführungsbeispielen näher erläutert werden. Es zeigen:
- **Figur 1**: ein schematisches Schaltbild für eine frequenzstabilisierte Laseranordnung gemäß einem ersten Ausführungsbeispiel der Erfindung
- **Figur 2**: ein schematisches Schaltbild für eine frequenzstabilisierte Laseranordnung gemäß einem zweiten Ausführungsbeispiel der Erfindung und
- **Figur 3**: ein Flussdiagramm zur Verdeutlichung des erfindungsgemäßen Verfahrens zur Einregelung der Laserfrequenz auf eine vorgegebene gewünschte Absorptionslinie.

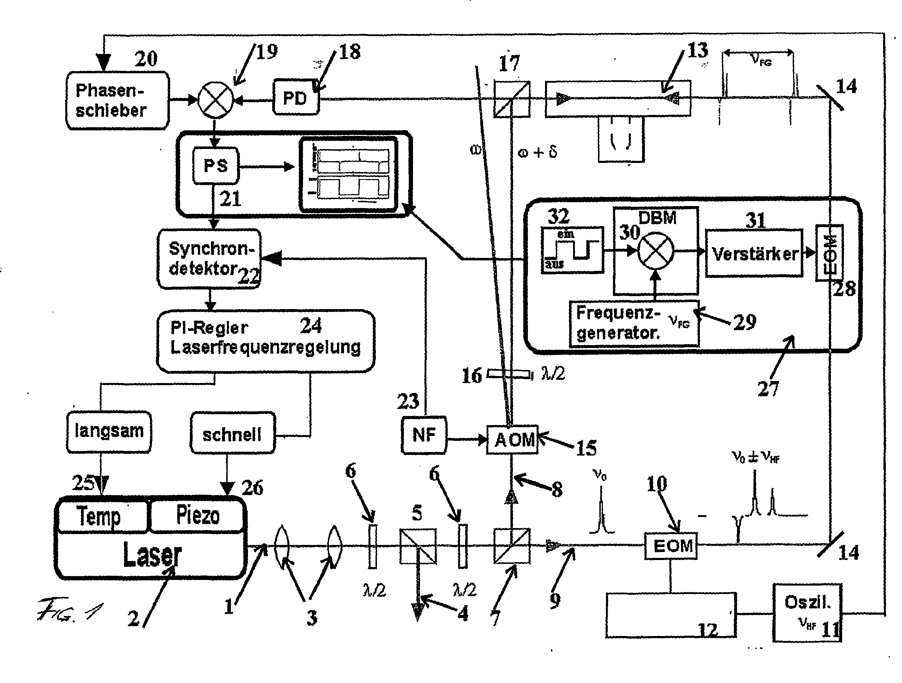

Bei dem in Figur 1 dargestellten Ausführungsbeispiel durchläuft ein Laserstrahl 1 eines Lasers 2 eine herkömmliche Abbildungsoptik 3 und zum Zwecke der Auskopplung eines Nutzstrahls 4 mittels eines Strahlteilers 5 zwei λ/2-Plättchen 6, 6' auf beiden Seiten des Strahlteilers 5, mit denen die Polarisationsebene des Laserstrahls 1 drehbar ist. Der Laserstrahl 1 wird anschließend in einem Strahlteiler 7 in einen Pumpstrahl 8 und einen Analysestrahl 9 aufgeteilt.

Wie für die Phasenmodulationsspektroskopie bekannt, werden dem Analysestrahl 9 mit der Frequenz ν₀ mit Hilfe eines elektrooptischen Modulators (EOM) 10 zwei Seitenbänder ν₀ + ν_{HF} und ν₀ - ν_{HF} aufmoduliert. Hierzu wird der EOM 10 mit einem Hochfrequenzoszillator 11 und einem Hochfrequenzverstärker 12 angesteuert. Die Modulationsfrequenz, mit der der EOM 10 die Laserfrequenz ν₀ moduliert, liegt typischerweise nicht über 10 MHz. Der mit den beiden ersten Seitenbändern ν₀ + ν_{HF} und ν₀ - ν_{HF} versehene Analysestrahl 9 durchläuft eine Absorptionsmaterial enthaltende Absorptionszelle 13 nach Umlenkung mittels Reflektoren 14.

Der Pumpstrahl 8 wird in bekannter Weise mit Hilfe eines akustooptischen Modulators (AOM) 15 niederfrequent moduliert wird, um in bekannter Weise das 1/f-Rauschen zu eliminieren. Über ein λ/2-Plättchen und einen Strahlteiler 17 wird der Pumpstrahl 8 so auf die Absorptionszelle 13 geleitet, dass er diese in umgekehrter Richtung zum Analysestrahl 9, aber mit diesem fluchtend durchläuft.

Der Analysestrahl gelangt über den Strahlteiler 17 in einen Fotodetektor 18, der das optische Signal in ein elektrisches Signal wandelt und einem doppelt balancierten Mischer 19 zuführt. Auf dessen zweiten Eingang gelangt das Ausgangssignal des Hochfrequenzoszillators 11 über einen Phasenschieber 20. Das Ausgangssignal des doppelt balancierten Mischers 19 gelangt auf einen Leistungsteiler 21 und kann damit betrachtet werden. Ein folgender Synchrondetektor 22, der von einer den AOM 15 speisenden Niederfrequenzquelle 23 getaktet wird, führt eine phasenempfindliche Detektion durch und erzeugt ein Steuersignal für einen nachfolgenden Pl-Regler 24, der zwei Ausgangssignale produziert, nämlich ein langsames Steuersignal, das auf eine Temperatursteuerung 25 des Lasers 2 einwirkt, und ein Steuersignal für eine schnelle Steuerung über ein Piezo-Element 26 des hier als Halbleiterlaser (Nd:YAG) ausgebildeten Lasers 2.

Während die bisher beschriebene Anordnung den herkömmlichen Aufbau eines beispielsweise jodstabilisierten Nd:YAG-Lasers 2 zeigt, ist erfindungsgemäß zur Modulation des Analysestrahls 9 eine Modulationseinrichtung 27 vorgesehen, durch die der Analysestrahl 9 mittels eines zweiten elektrooptischen Modulators 28 mit einer zweiten Seitenbandfrequenz ν_{FG} moduliert wird. Hierzu wird der EOM 28 von einem Frequenzgenerator 29 der Frequenz ν_{FG} über einen doppelt balancierten Mischer 30 und einen Verstärker 31 angesteuert. Der zweite Eingang des doppelt balancierten Mischers 30 erhält in diesem Ausführungsbeispiel ein periodisches Ein-Aus-Signal 32, mit dem die Modulation mit der zweiten Seitenbandfrequenz ν_{FG} niederfrequent und periodisch ein- und ausgeschaltet wird. Die Modulationsfrequenz ν_{FG} des Frequenzgenerators 29 beträgt typischerweise größenordnungsmäßig 250 MHz und ist definiert entsprechend dem Abstand einer Absorptionslinie des Absorptionsmaterials in der Absorptionszelle 13, auf der die Frequenzstabilisierung des Lasers 2 stattfinden soll, zu einer benachbarten Absorptionslinie eingestellt bzw. einstellbar.

Die Feststellung einer Absorption der Laserfrequenz ν₀ in dem Absorptionsmaterial der Absorptionszelle 13 beruht darauf, dass sich ohne Absorption die im Fotodetektor 18 detektierten Amplituden der ersten Seitenbänder ν₀ + ν_{HF} und ν₀- ν_{HF} aufheben, sodass kein Signal detektiert wird. lst jedoch der betreffende Frequenzübergang des Absorptionsmaterials in der Absorptionszelle 13 durch den Pumpstrahl 8 bereits gesättigt, hat also eine Absorption bei der Frequenz ν₀ stattgefunden, erfahren die Seitenbändern ungleiche Absorption und Phasenverschiebungen, sodass ein resultierendes Detektorsignal entsteht. Es entsteht ein Dispersionssignal in Phase mit der angelegten Modulationsfrequenz und ein um 90° phasenverschobenes Absorptionssignal. Das Dispersionssignal wird als Diskriminatorsignal für die Frequenzregelung eingesetzt. Das bekannte Verfahren der Phasenmodulationsspektroskopie erlaubt eine Schrotrausch begrenzte, quantenlimitierte Detektion der Signale und vermeidet gleichzeitig die störende Modulation der Laserfrequenz des Nutzstrahls.

Wir die erfindungsgemäß erzeugte zweite Seitenbandfrequenz im Abstand ν_{FG} von der Laserfrequenz ν₀ im Absorptionsmaterial der Absorptionszelle 13 absorbiert, wird dadurch das Fehlersignal gestört. Im Takte des Ein- und Ausschaltens mittels des Signals 32 entstehen im Fehlersignal Spitzen, die anzeigen, dass eine Absorption der zweiten Seitenbandfrequenz im Material der Absorptionszelle 13 stattfindet. Dies ist ein Indikatorsignal dafür, dass die Frequenzstabilisierung des Lasers 2 auf der "richtigen" gewünschten Absorptionslinie des Absorptionsmaterials in der Absorptionszelle 13 stattfindet.

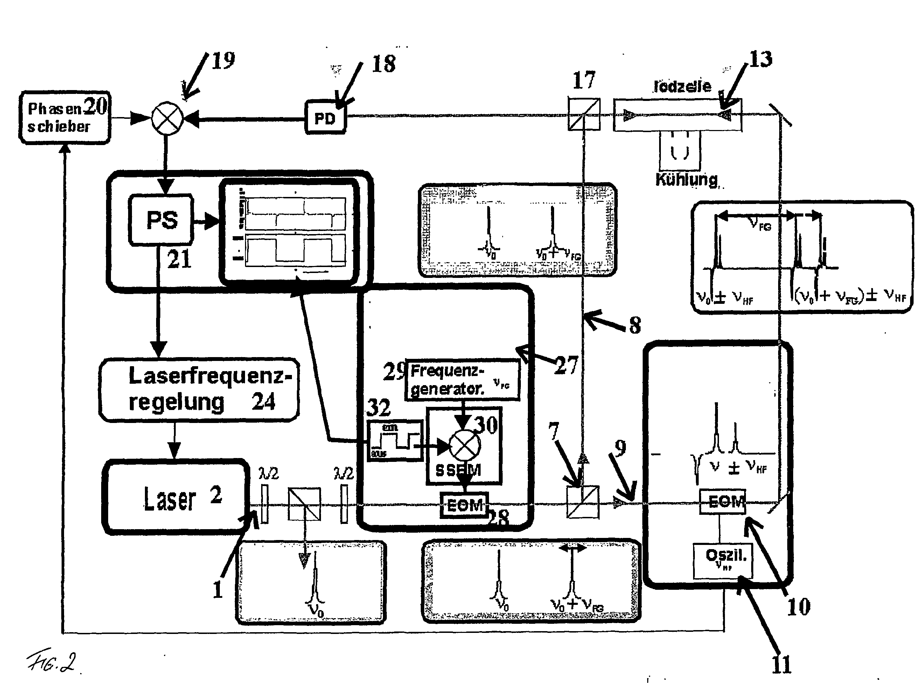

Bei dem in Figur 2 dargestellten Ausführungsbeispiel sind gleiche Teile mit gleichen Bezugsziffern versehen. Die Beschreibung beschränkt sich auf die Darstellung der Unterschiede zum in Figur 1 dargestellten ersten Ausführungsbeispiel.

Bei dem in Figur 2 dargestellten zweiten Ausführungsbeispiel befindet sich der EOM 28 zur Erzeugung der Modulation mit der zweiten Seitenbandfrequenz ν_{FG} vor dem Strahlteiler 7, durch den der Laserstrahl 1 in den Pumpstrahl 8' und den Analysestrahl 9' aufgeteilt wird. Demgemäß weist bereits der Pumpstrahl 8' neben der Laserfrequenz ν₀ das zweite Seitenband mit der Frequenz ν₀ + ν_{FG} auf und durchläuft in dieser Form die Absorptionszelle 13. In herkömmlicher Weise wirkt der EOM 10 nur auf den Analysestrahl 9' und erzeugt die nahen Seitenbänder mit der Frequenz ν +/- ν_{HF}. Zur Detektion der Nachbarlinien ist der Frequenzgenerator 29, der den EOM 28 ansteuert, variabel ausgebildet, sodass es möglich ist, die jeweilige Nachbarlinie einzufangen und deren Abstand zu der Hauptlinie, auf der die Laserstabilisierung gerade stattfindet, zu bestimmen. Selbstverständlich ist es auch bei dem in Figur 1 dargestellten ersten Ausführungsbeispiel möglich, eine derartige Bestimmung durch Variation der Frequenz des Frequenzgenerators 29 und Detektion der Resonanz der oben beschriebenen Weise vorzunehmen.

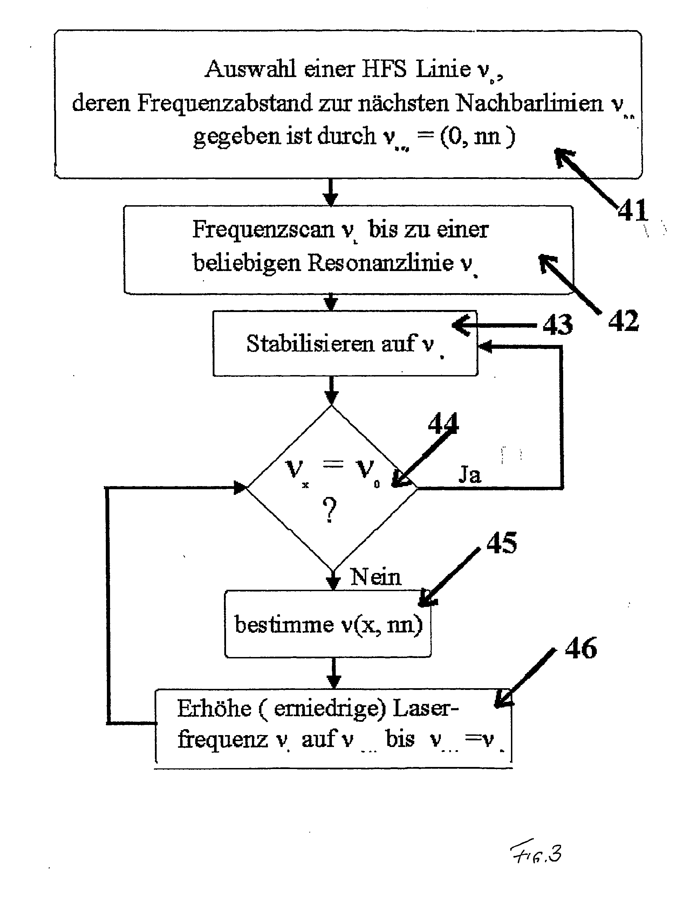

Ein Verfahren zur Einstellung der stabilisierten Laseranordnung auf eine gewünschte Absorptionslinie der Hyperfeinstruktur, beispielsweise von gasförmigem Jod, ist in Figur 3 anhand eines Flussdiagramms dargestellt.

In einem ersten Schritt 41 wird eine Hyperfeinstrukturlinie ν₀ ausgewählt, auf der die Stabilisierung des Laserstrahls 1 stattfinden soll. Diese Hyperfeinstrukturlinie ν₀ weist einen definierten Abstand zu einer benachbarten Linie νₙₙ auf. Die Abstände der Linien der Hyperfeinstruktur können beispielsweise in einer Tabelle abgespeichert sein.

In einem nächsten Schritt 42 wird die Frequenz ν_{L} des Lasers 2 verstellt, bis eine erste Resonanz mit Hilfe der Absorptionszelle 13 festgestellt wird. Auf dieser Absorptionslinie νₓ wird im Schritt 43 die Stabilisierung der Laserfrequenz vorgenommen.

Durch Vorgabe des gewünschten Abstandes zur nächsten Nachbarlinie kann überprüft werden, ob die zufällig gefundene Resonanzlinie νₓ bereits die gesuchte Hyperfeinstrukturlinie ν₀ ist (Vergleichsschritt 44). Ist dies der Fall, wird der Stabilisierungskreis mit den Schritten 43 und 44 geschlossen, wobei die Überprüfung, ob noch auf der richtigen Linie stabilisiert wird durch das Ein- und Ausschaltsignal 32 gesteuert wird.

Ist die erste gefundene Linie νₓ noch nicht die gesuchte Hyperfeinstrukturlinie ν₀ kann nun durch Verstellung der Frequenz des Frequenzgenerators 29 der Abstand zur nächsten Nachbarlinie bestimmt werden, um so im Schritt 45 durch Bestimmung des Frequenzabstandes zur benachbarten Resonanzlinie die absolute Frequenz der gefundenen Resonanzlinie νₓ festzustellen. Da nun bekannt ist, auf welcher Resonanzlinie die derzeitige Stabilisierung stattfindet, kann sowohl die Verstellrichtung als auch das Maß der Verstellung der Laserfrequenz ν_{L} bis zur gewünschten Absorptionslinie ν₀ ermittelt und die entsprechende Verstellung im Schritt 46 vorgenommen werden. Es finden dann die Schritte 43 und 44 zur Stabilisierung auf der gewünschten Absorptionslinie ν₀ und die ständige Überprüfung, ob diese Stabilisierung noch Bestand hat, statt.

In der beschriebenen Weise gelingt somit sowohl die Einregelung auf die gewünschte Resonanzlinie ν₀ als auch die Langzeitstabilisierung durch ständige Überprüfung, ob die Stabilisierung immer noch auf der richtigen Resonanzlinie stattfindet.

## Patentansprüche

1. Verfahren zur Überprüfung des Regelungszustandes einer frequenzstabilisierten Laseranordnung mit einem Laser (2), dessen Laserstrahl (1) wenigstens eine erste Seitenbandfrequenz ν_{HF} aufmoduliert wird und durch ein Absorptionsmaterial (13) geleitet wird, das eine Mehrzahl von Absorptionslinien in einem Verstimmbereich des Lasers (2) aufweist, die in unterschiedlichen Abständen zueinander angeordnet sind, wobei die Laserfrequenz ν₀ verstimmt wird und als Regelsignal für die Laserfrequenz ν₀ detektiert wird, ob eine Absorption im Absorptionsmaterial stattgefunden hat, **dadurch gekennzeichnet, dass** dem Laserstrahl (1) eine zweite Seitenbandfrequenz ν_{FG} mit einem durch einen Frequenzgenerator (29) definierten und bekannten Abstand zur Laserfrequenz ν₀ aufmoduliert wird, dass zumindest zeitweise die Absorption der zweiten Seitenbandfrequenz ν₀ + ν_{FG} im Absorptionsmaterial überprüft wird und dass die Laserfrequenz ν₀, wenn für die zweite Seitenbandfrequenz keine Absorption festgestellt wird, solange verstimmt wird, bis eine Absorption sowohl der Laserfrequenz ν₀ als auch der zweiten Seitenbandfrequenz ν₀ + ν_{FG} festgestellt wird.

2. Frequenzstabilisierte Laseranordnung mit einem Laser (2) dessen Laserstrahl (1) wenigstens eine mittels einer ersten Modulationseinrichtung (10, 11, 12) erzeugte erste Seitenbandfrequenz ν₀ ± ν_{HF} zu einer Laserfrequenz ν₀ aufweist und ein Absorptionsmaterial durchläuft, das eine Mehrzahl von Absorptionslinien in einem Verstimmbereich des Lasers (2) aufweist, die in unterschiedlichen Abständen zueinander angeordnet sind, mit einer Verstimmeinrichtung (24, 25, 26) für die Verstimmung der Laserfrequenz ν_{L} über den Verstimmbereich und mit einer Auswertungseinrichtung zur Erkennung einer Absorption in dem Absorptionsmaterial und zur Einregelung des Lasers (2) auf eine 1^{e} Absorptionslinie auf der die Stabilisierung erfolgen soll, **gekennzeichnet durch** eine zweite Modulationseinrichtung (27) zur Generierung wenigstens einer zweiten Seitenbandfrequenz ν₀ + ν_{FG} desselben Laserstrahls (1), deren Abstand ν_{FG} zur Laserfrequenz ν₀ definiert vorgebbar, deutlich größer als der Abstand ν_{HF} der ersten Seitenbandfrequenz ν₀ ± ν_{HF} ist, und dem Abstand einer benachbarten 2^{e} Absorptionslinie zu den 1^{e} Absorptionslinie entspricht, und **durch** eine Detektionseinrichtung zur Feststellung einer Absorption der zweiten Seitenbandfrequenz im Absorptionsmaterial.

3. Frequenzstabilisierte Laseranordnung nach Anspruch 2, **gekennzeichnet durch** eine Ein- und Ausschalteinrichtung (32) für die zweite Modulationseinrichtung (27).

4. Frequenzstabilisierte Laseranordnung nach Anspruch 2 oder 3, **dadurch gekennzeichnet, dass** der Laser (2) ein Nd:YAG-Laser ist.

5. Frequenzstabilisierte Laseranordnung nach Anspruch 4, **dadurch gekennzeichnet, dass** der Laser (2) ein frequenzverdoppelter Nd:YAG-Laser ist.

6. Frequenzstabilisierte Laseranordnung nach einem der Ansprüche 2 bis 5, **dadurch gekennzeichnet, dass** das Absorptionsmaterial Jod in Gasform ist.

## Claims

1. A method for checking the regulation state of a frequency-stabilized laser arrangement having a laser (2) whose laser beam (1) is modulated at at least one first sideband frequency V_{RF} and is passed through an absorption material (13) which has two or more absorption lines in a tuning range of the laser (2), which absorption lines are arranged at different intervals from one another, with the laser frequency V_{L} being tuned and being detected as a regulation signal for the laser frequency V_{L} to determine whether any absorption has taken place in the absorption material, **characterized in that** the laser beam (1) is modulated at a second sideband frequency V_{FG} at a known separation, which is defined by a frequency generator (29), from the laser frequency Vₒ, **in that** the absorption of the second sideband frequency Vₒ + V_{FG} in the absorption material is checked at least at times, and **in that**, when no absorption is found for the second sideband frequency, the laser frequency V_{L} is tuned until absorption is found both at the laser frequency Vₒ and at the second sideband frequency Vₒ + V_{FG}.

2. A frequency-stabilized laser arrangement having a laser (2) whose laser beam (1) has at least one first sideband frequency Vₒ ± V_{RF} (which is produced by means of a first modulation device (10, 11, 12)) with respect to a laser frequency Vₒ and passes through an absorption material which has two or more absorption lines in a tuning range of the laser (2), which absorption lines are arranged with different separations between them, having a tuning device (24, 25, 26) for tuning the laser frequency V_{L} over the tuning range, and having an evaluation device for identification of absorption in the absorption material and for regulation of the laser (2) at an absorption line, **characterized by** a second modulation device (27) for generation of at least one second sideband frequency V₀ + V_{FG} for the same laser beam (1) whose separation V_{FG} from the laser frequency Vₒ can be predetermined in a defined manner and is considerably greater than the separation V_{RF} of the first sideband frequency V₀ ± V_{RF}, and by a detection device for detection of absorption of the second sideband frequency in the absorption material.

3. The frequency-stabilized laser arrangement as claimed in claim 2, **characterized by** a device (32) for switching the second modulation device (27) on and off.

4. The frequency-stabilized laser arrangement as claimed in claim 2 or 3, **characterized in that** the laser (2) is a Nd:YAG laser.

5. The frequency-stabilized laser arrangement as claimed in claim 4, **characterized in that** the laser (2) is a Nd:YAG laser at twice the frequency.

6. The frequency-stabilized laser arrangement as claimed in one of claims 2 to 5, **characterized in that** the absorption material is iodine in gaseous form.

## Revendications

1. Procédé pour le contrôle de l'état de régulation d'un système laser à fréquence stabilisée comprenant un laser (2) dont le faisceau laser (1) est modulé à au moins une première fréquence de bande latérale V_{HF} et est guidé à travers un matériau d'absorption (13) qui présente une pluralité de raies d'absorption dans un domaine d'accordage du laser (2), les raies étant agencées l'une par rapport à l'autre avec différents écarts, procédé dans lequel la fréquence laser ν₀ est accordée et est détectée comme signal de régulation pour la fréquence laser ν_{0,} si une absorption a eu lieu dans le matériau d'absorption, **caractérisé en ce que** le faisceau laser (1) est modulé à une deuxième fréquence de bande latérale ν_{FG} ayant un écart à la fréquence laser ν₀ connu et défini au moyen d'un générateur de fréquence (29), **en ce que** l'absorption de la deuxième fréquence de bande latérale ν₀ + ν_{FG} dans le matériau d'absorption est contrôlée au moins de temps en temps, et **en ce que**, lorsque aucune absorption n'est constatée pour la deuxième fréquence de bande latérale, la fréquence laser ν₀ est accordée jusqu'à ce qu'une absorption non seulement de la fréquence laser ν₀ mais aussi de la deuxième fréquence de bande latérale ν₀ + ν_{FG} soit constatée.

2. Système laser à fréquence stabilisée comprenant un laser (2) dont le faisceau laser (1) présente au moins une première fréquence de bande latérale ν₀ ± ν_{HF} d'une fréquence laser ν_{0,} la première bande étant générée à partir d'un premier dispositif de modulation (10, 11, 12), le faisceau laser parcourant un matériau d'absorption qui présente une pluralité de raies d'absorption dans un domaine d'accordage du laser (2), les raies étant agencées l'une par rapport à l'autre avec différents écarts, le système comprenant un dispositif d'accordage (24, 25, 26) pour accorder la fréquence laser ν_{L} dans le domaine d'accordage et avec un dispositif d'évaluation pour identifier une absorption dans le matériau d'absorption et pour la mise au point du laser (2) sur une première raie d'absorption sur laquelle la stabilisation doit avoir lieu, **caractérisé par** un deuxième dispositif de modulation (27) pour générer au moins une deuxième fréquence de bande latérale ν₀ + ν_{FG} pour le même faisceau laser (1), deuxième bande dont l'écart ν_{FG} à la fréquence laser ν₀ est défini de préférence significativement plus grand que l'écart ν_{HF} de la première fréquence de bande latérale ν₀ ± ν_{HF} et correspond à l'écart d'une deuxième raie d'absorption adjacente à la première raie d'absorption, et par un dispositif de détection pour constater une absorption de la deuxième fréquence de bande latérale dans le matériau d'absorption.

3. Système laser à fréquence stabilisée selon la revendication 2, **caractérisé par** un dispositif de mise en marche et de mise à l'arrêt (32) du deuxième dispositif de modulation (27).

4. Système laser à fréquence stabilisée selon la revendication 2 ou 3, **caractérisé en ce que** le laser (2) est un laser Nd :YAG.

5. Système laser à fréquence stabilisée selon la revendication 4, **caractérisé en ce que** le laser (2) est un laser Nd :YAG doublé en fréquence.

6. Système laser à fréquence stabilisée selon l'une des revendications 2 à 5, **caractérisé en ce que** le matériau d'absorption est de l'iode sous forme gazeuse.
